# EUROPEAN PATENT APPLICATION

(11) **EP 4 756 530 A1**
(43) Date of publication of application: **10.06.2026**
(21) Application number: 24849546.7
(22) Date of filing: 30.07.2024
(51) Int. Cl.: G03B 17/12, H04N 23/54, G02B 7/02

(54) **CAMERA MODULE**

(30) Priority: 02.08.2023 KR 20230101298
(71) Applicant: LG INNOTEK CO. LTD, Gangseo-gu Seoul 07796 (KR)
(72) Inventor: WOO, Gyung Mok, Seoul 07796 (KR); PARK, Jong Hyun, Seoul 07796 (KR); YOON, Kyeong Mok, Seoul 07796 (KR)
(74) Representative: Plasseraud IP
(86) International application number: PCT/KR2024/011076
(87) International publication number: WO 2025/028978

(57) **Abstract**

The camera module includes: a first body which includes a body part and a barrel part protruding upward from the top surface of the body part, the barrel part having a hole formed on the top surface thereof; and a lens module which has at least a portion coupled to the hole and includes a barrel and a lens disposed in the barrel. The side surface of the barrel includes: a flange protruding outward more than other regions and disposed on the barrel part; and a welding part disposed between the flange and the barrel part. The barrel part includes a first region having a surface-treated outer surface, and a second region disposed on the first region without being surface-treated. The outer surface of the welding part protrudes outward more than the outer surface of the first region.

## Description

### [Technical Field]

The present embodiment relates to a camera module.

### [Background Art]

Recently, ultra-small camera modules have been developed and are widely used in small electronic products such as smartphones, laptops, and game consoles.

As automobiles become more popular, ultra-small cameras are widely used in vehicles as well as in small electronic products. For example, black box cameras for vehicle protection or objective data on traffic accidents, rear surveillance cameras that allow drivers to monitor the blind spots at the rear of the vehicle through a screen to ensure safety when reversing, and surrounding detection cameras that can monitor the surroundings of the vehicle are provided.

A camera may be equipped with a lens, a lens holder that accommodates the lens, an image sensor that converts an image of a subject collected in the lens into an electrical signal, and a printed circuit board on which the image sensor is mounted. A housing forming the outer appearance of the camera is formed with a structure in which the entire area is sealed to prevent internal components from being contaminated by foreign substances containing moisture.

### [Detailed Description of the Invention]

### [Technical Subject]

The present embodiment is intended to provide a camera module that can lower the manufacturing cost by reducing the number of parts and can firmly fix the lens module to the body.

### [Technical Solution]

The camera module according to the present embodiment comprises: a first body which includes a body part and a barrel part being protruded upward from a top surface of the body part and having a hole being formed on the top surface; and a lens module at least partially coupled to the hole and including a barrel and a lens being disposed inside the barrel, wherein it includes a flange being protruded outward more than other regions and disposed on the barrel part on the side surface of the barrel, wherein it includes a welding part being disposed between the flange and the barrel part, wherein the barrel part includes a first region having a surface-treated outer surface, and a second region being disposed on the first region not being surface-treated, and wherein an outer surface of the welding part is protruded outward more than an outer surface of the first region.

The first region may be an anodized region.

A separation region, at least a portion of which is spaced apart in an optical axis direction, may be disposed between the flange and the barrel part.

The separation region may be disposed inside the welded part.

With respect to an optical axis direction, the length of the separation region may be 15% or less of the thickness of the barrel part.

An outer surface of the first region may be protruded further outward than an outer surface of the second region.

The cross-sectional shape of each of the flange and the barrel part may be circular.

A first chamfered surface is formed on an upper outer surface of the barrel part where the welded part is formed, and a second chamfered surface may be formed on a lower outer surface of the flange where the welded part is formed.

The material of the first body and the barrel may be metal.

### [Advantageous Effects]

Through the present embodiment, the coupling between the first body and the lens module via welding eliminates the need for means such as adhesives or sealing members; therefore, there are advantages in that the manufacturing cost can be reduced by decreasing the number of parts, and the assembly process can be further simplified.

In addition, since the distance between the lens module and the substrate module in the optical axis direction can be precisely adjusted before the welding process between the first body and the lens module, there is an advantage in that the optimal resolution value can be secured within the camera module.

### [Brief Description of Drawings]

FIG. 1 is a perspective view illustrating the outer appearance of a camera module according to an embodiment of the present invention.
FIG. 2 is a plan view illustrating a side view of a camera module according to an embodiment of the present invention.
FIG. 3 is a cross-sectional view of a camera module according to an embodiment of the present invention.
FIG. 4 is an exploded perspective view of a camera module according to an embodiment of the present invention.
FIG. 5 is a plan view illustrating a coupling structure of a first body and a lens module according to an embodiment of the present invention.
FIG. 6 is a plan view illustrating a coupling region of a first body and a lens module according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used hereinafter is defined as the optical axis direction of the lens. Meanwhile, the 'optical axis direction' may correspond to 'up-down direction', 'z-axis direction', and the like.

Hereinafter, the present invention will be described in more detail with reference to the attached drawings.

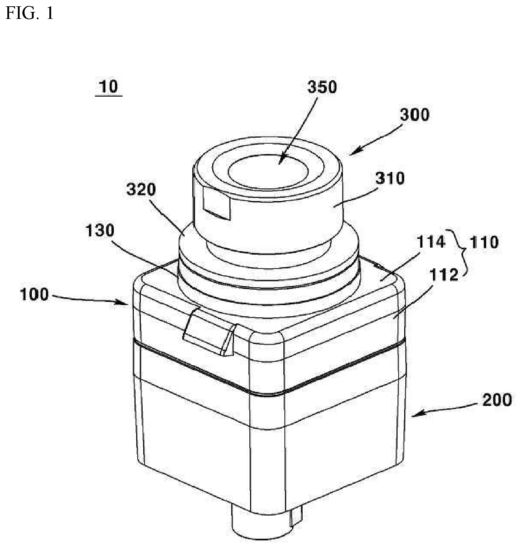

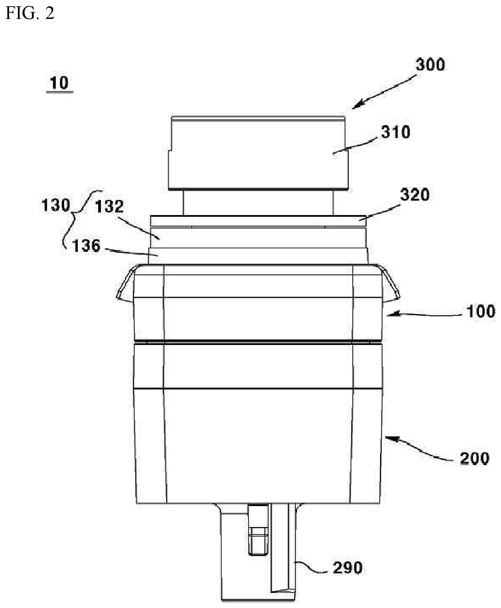

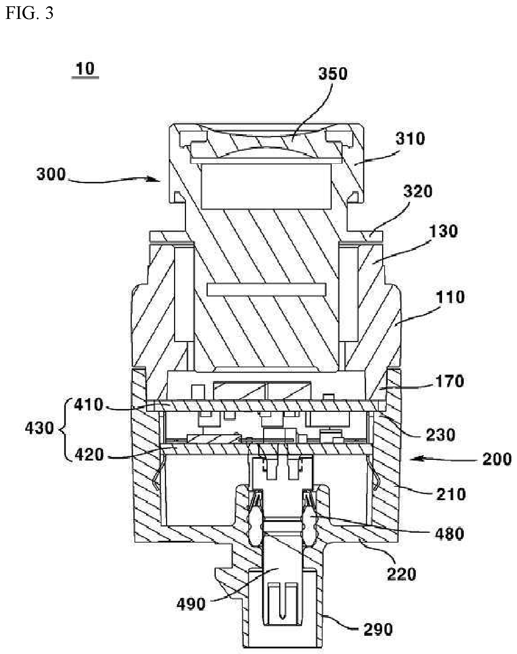

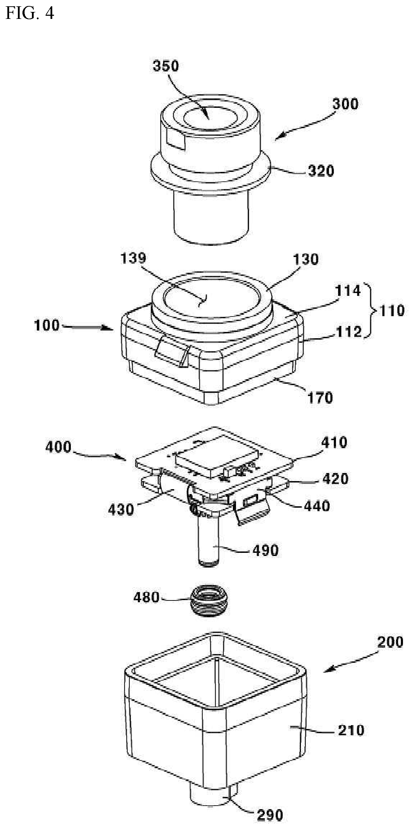

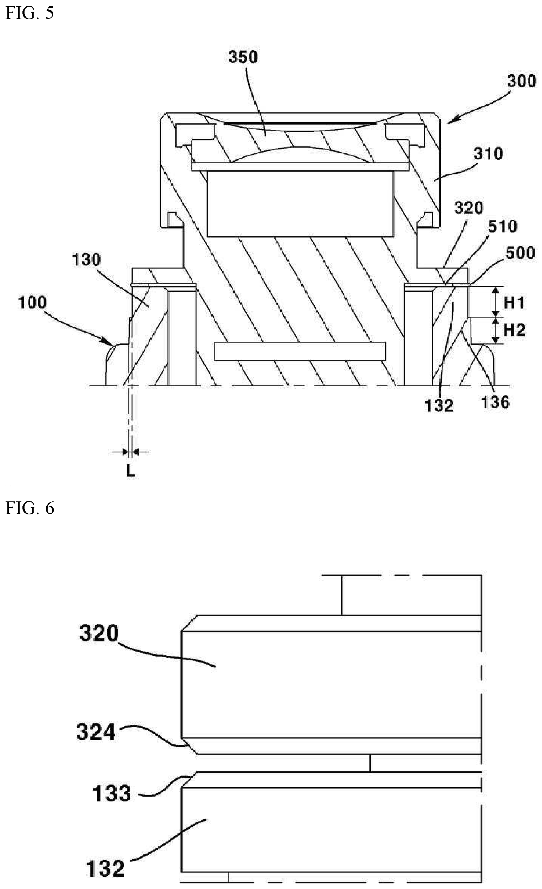

FIG. 1 is a perspective view illustrating the outer appearance of a camera module according to an embodiment of the present invention; FIG. 2 is a plan view illustrating a side view of a camera module according to an embodiment of the present invention; FIG. 3 is a cross-sectional view of a camera module according to an embodiment of the present invention; FIG. 4 is an exploded perspective view of a camera module according to an embodiment of the present invention; FIG. 5 is a plan view illustrating a coupling structure of a first body and a lens module according to an embodiment of the present invention; and FIG. 6 is a plan view illustrating a coupling region of a first body and a lens module according to an embodiment of the present invention.

Referring to FIGS. 1 to 6, a camera module **10** according to an embodiment of the present invention may be a vehicle camera module. The camera module **10** may be coupled to a vehicle. The camera module **10** may be used in at least one among a front camera, a side camera, a rear camera, and a black box of the vehicle. The camera module **10** may be disposed at the front of the vehicle. The camera module **10** may be disposed at the rear of the vehicle. The camera module **10** may be coupled to the windshield of the vehicle. The camera module **10** may be coupled to the windshield of the front or rear of the vehicle. The camera module **10** may be disposed at the side of the vehicle. The camera module **10** may photograph a subject and output the image as an image on a display (not shown.

The camera module **10** may include a first body **100.** The first body **100** may be named any one among a front body, an upper housing, a first housing, and a front cover. The first body **100** may include a body part **110.** The first body **100** may include a barrel part **130.** The body part **110** and the barrel part **130** may be formed integrally.

The body part **110** may be formed of a metal material. The body part **110** may be disposed on a second body **200,** which will be described later. The body part **110** may be coupled to the second body **200.** The lower end of the body part **110** may be fixed to the second body **200.** The body part **110** may be coupled to the second body **200** by welding. Unlike this, the body part **110** may be coupled to the second body **200** by an adhesive or fusion. The body part **110** may be coupled to a substrate module **400,** which will be described later.

The body part **110** may be formed in a rectangular shape with an open lower portion. At this time, the corners of the body part **110** may be formed to be rounded. The body part **110** may include a top plate **114** and a first side plate **112** being extended downward from an edge of the top plate **114.** The top plate **114** may be formed in a rectangular shape. The top plate **114** may be extended outward from a lower outer surface of the barrel part **130.** The first side plate **112** may be extended downward from an outer edge of the top plate **114.** The first side plate **112** may be provided in plurality. The first side plate **112** may include four side plates. The first side plate **112** may be formed in a rectangular plate shape. The first side plate **112** may include a first-first side plate, a first-second side plate, a first-third side plate being disposed opposite the first-first side plate, and a first-fourth side plate disposed opposite the first-second side plate. The first side plate **112** may include first-first to first-fourth corners being disposed between the first-first to first-fourth side plates, respectively. Each of the first-first to first-fourth corners may include a round shape at least in portion.

A space portion being partitioned from other regions may be formed inside the body part **110.** The space portion may have an open lower portion and an upper portion that may be covered by the barrel part **130** and the lower surface of the lens module **300.**

The body part **110** may include a first guide **170** (see FIG. 3). The first guide **170** may have a shape being protruded downward from the lower surface of the top plate **114.** The first guide **170** may be in contact with a top surface of the substrate module **400.** The lower surface of the first guide **170** may be in contact with a top surface of the first substrate **410** inside the substrate module **400,** which will be described later. The coupling region of the substrate module **400** may be guided in a space inside the camera module **10** through the first guide **170.**

The first body **100** may include a barrel part **130.** The barrel part **130** may be a lens barrel. The barrel part **130** may be formed of a metal material. The barrel part **130** may have a circular cross-sectional shape. The barrel part **130** may be disposed on the body part **110.** The barrel part **130** may be extended upward from a top surface of the body part **110.** The barrel part **130** may be formed integrally with the body part **110.** As a modified embodiment, the barrel part **130** may be coupled to the body part **110.** In this case, the barrel part **130** may be fixed to the body part **110** by an adhesive. The barrel part **130** may accommodate a lens module **300** therein. The center of the barrel part **130** may include a hole **139** into which a lens module **300** is coupled. The lens module **300** may be disposed in the hole **139** of the barrel part **130.** The inner circumferential surface of the hole of the barrel part **130** may be formed in a shape and size corresponding to the outer circumferential shape of the lens module **300.**

In that the barrel part **130** is protruded upward from the top surface of the body part **110,** the barrel part **130** may be referred to as a protruded portion.

As illustrated in FIG. 6, a first chamfered surface **133** may be formed on an upper outer surface of the barrel part **130.** The first chamfered surface **133** may be formed to be inclined with respect to the side surface and the top surface of the barrel part **130** so as to connect the side surface and the top surface of the barrel part **130.** The first chamfered surface **133** may form an obtuse angle with each of the side surface and the top surface of the barrel part **130.**

At least a portion of the outer surface of the first body **100** may be surface-treated. At least a portion of the outer surface of the first body **100** may be anodized. The outer surface of the first body **100** may include a first region, which is a region being surface-treated through anodizing, and a second region, which is a region not being surface-treated. The second region may be a region where the material of the first body **100** is exposed to the outside through the outer surface.

As illustrated in FIGS. 2 and 5, the barrel part **130** may include a first region **136,** which is a region whose outer surface is surface-treated through anodizing, and a second region **132,** which is a region whose outer surface is not surface-treated. The first region **136** may be disposed below the second region **132.** The second region **132** may be coupled with a flange **320** of a lens module **300,** which will be described later. The outer surface of the first body **100** may be surface-treated through anodizing in all regions except for the outer surface of the second region **132** and the top surface where the lens module **300** is coupled.

With respect to the optical axis direction of the lens module **300,** the length **H1** of the second region **132** may be 1 mm or more. With respect to the optical axis direction of the lens module **300,** the length **H1** of the second region **132** may be equal to or longer than the length **H2** of the first region **136.**

Due to the surface treatment through anodizing, the outer surface of the first region **136** and the outer surface of the second region **132** may be disposed with a step between them. The outer surface of the first region **136** may have a shape being protruded outward more than the outer surface of the second region **132** in a direction perpendicular to the optical axis. The cross-sectional area of the first region **136** including the surface-treated region may be larger than the cross-sectional area of the second region **132.** The length (see **L** in FIG. 5) between the outer surface of the first region **136** and the outer surface of the second region **132** in a direction perpendicular to the optical axis may be 0.05 mm or more. In other words, the thickness of the surface treatment region being formed on an outer surface of the first region **136** may be 0.05 mm or more.

The camera module **10** may include a second body **200.** The second body **200** may be referred to as any one among a rear body, a lower housing, a second housing, and a rear cover. The second body **200** may be formed in a rectangular shape with an open upper portion. The second body **200** may be formed of a metal material. The second body **200** may be disposed below the first body **100.** The second body **200** may be coupled with the first body **100.** The second body **200** may form an internal space through coupling with the first body **100.** The second body **200** may include a space portion having an open top surface.

The second body **200** may include a lower plate **220.** The lower plate **220** may face the top plate **114** of the body part **110** of the first body **100.** The lower plate **220** may be spaced apart from the top plate **114** of the body part **110** of the first body **110** in an optical axis direction. The lower plate **220** may be parallel to the top plate **114** of the body part (**110** of the first body **100.** The lower plate **220** may be formed in a square shape. At this time, at least a portion of the corner of the lower plate **220** may include a round shape.

The second body **200** may include a second side plate **210.** The second side plate **210** may be extended from the lower plate **220.** The second side plate **210** may be extended upward from an outer edge of the lower plate **220.** A shield member (not shown) may be disposed in the second side plate **210.** The shield member may be in surface contact with an inner surface of the second side plate **210.** The upper end of the second side plate **210** may be coupled to the first body **100.** The top surface of the second side plate **210** may be disposed to face the lower surface of the first side plate **112** in an optical axis direction. The top surface of the second side plate **210** may be in contact with the lower surface of the first side plate **112.** The first side plate **112** and the second side plate **210** can be coupled to each other by at least one among welding, adhesive, and fusion. The outer surface of the second side plate **210** can be disposed on the same plane as the outer surface of the first side plate **112** of the first body **100.**

The second body **200** may include a connector withdrawal portion **290.** The connector withdrawal portion **290** may have a shape being protruded downward from the lower surface of the lower plate **220.** A connector **490,** which will be described later, may be disposed inside the connector withdrawal portion **290.** The connector withdrawal portion **290** may be formed of a metal material. The connector withdrawal portion **290** may have a hollow pipe shape inside.

A sealing member **480** (see FIG. 3) is disposed between the inner surface of the connector withdrawal portion **290** and the outer surface of the connector **490,** thereby preventing external foreign substances from entering the space inside the camera module **10.**

The second body **200** may include a second guide **230** (see FIG. 3). The second guide **230** may have a shape being protruded inward from the inner surface of the second side plate **210.** Due to the second guide **230,** the space inside the second body **200** may include a plurality of regions with different cross-sectional areas. For example, the cross-sectional area of the upper region of the space inside the second body **200** where the second guide **230** is not formed may be larger than the cross-sectional area of the lower region of the space inside the second body **200** where the second guide **230** is formed. The top surface of the second guide **230** may support the lower surface of the first substrate **410** of the substrate module **400,** which will be described later. The top surface of the second guide **230** may be in contact with the lower surface of the first substrate **410.**

Like the first body **100,** at least a portion of the outer surface of the second body **200** may be surface-treated. At least a portion of the outer surface of the second body **200** may be anodized.

The camera module **10** may include a lens module **300.** The lens module **300** may be coupled to the first body **100.** The lens module **300** may be coupled to the hole **139** of the barrel part **130.** At least a portion of the lens module **300** may be disposed inside the barrel part **130,** and the remaining portion may be disposed to be protruded upward from the first body **100.**

The lens module **300** may include a barrel **310** and one or more lenses **350** accommodated inside the barrel **310.** The lens **350** may be disposed to face an image sensor inside a substrate module **400,** which will be described later, in an optical axis direction. The lens **350** may be aligned with the image sensor along an optical axis. The lens **350** may be provided in multiple numbers and may be disposed to be spaced apart from each other along an optical axis direction inside the barrel **310.** The outermost lens among the multiple lenses **350** may be exposed upward of the camera module **10.**

The barrel **310** may include a space therein having open top and lower surfaces. The lens **350** may be disposed in the space of the barrel **310.** The barrel **310** may include a plurality of regions with different cross-sectional areas. For example, a region of the barrel **310** disposed inside the first body **100** may have a smaller cross-sectional area than a region of the barrel **310** being protruded upward from the first body **100.** The barrel **310** may have a circular cross-sectional shape.

The barrel **310** may be made of metal.

The barrel **310** may include a flange **320.** The flange **320** may be disposed on an outer surface of the barrel **310.** The flange **320** may have a shape being protruded more outward than the other regions of the outer surface of the barrel **310.** The flange **320** may have a circular cross-sectional shape. When the lens module **300** is coupled to the first body **100,** the flange **320** may be disposed on an upper portion of the barrel part **130** of the first body **100.** The lower surface of the flange **320** may be disposed to face the lower surface of the barrel part **130** in an optical axis direction. The outer circumferential surface of the flange **320** may be disposed to form the same plane as the outer circumferential surface of the barrel part **130.** The cross-sectional area of the flange **320** may correspond to the cross-sectional area of the barrel part **130.**

As illustrated in FIG. 6, a second chamfered surface **324** may be formed on the lower outer surface of the flange **320.** The second chamfered surface **324** may be disposed to face the first chamfered surface **133** of the barrel part **130** in an optical axis direction. The second chamfered surface **324** may be formed to be inclined with respect to the side surface and the lower surface of the flange **320** so as to connect the side surface and the lower surface of the flange **320.** The second chamfered surface **324** may form an obtuse angle with the side surface and the lower surface of the flange **320,** respectively. A welded part **500** (see FIG. 5), which will be described later, may be formed between the second chamfered surface **324** of the flange **320** and the first chamfered surface **133** of the barrel part **130.** The welding process for forming a welded part **500** can be performed more easily by the first chamfered surface **133** and the second chamfered surface **324.**

The camera module **10** may include a substrate module **400.** The substrate module **400** may be disposed in a space within the camera module **10.** The substrate module **400** may be disposed between the first body **100** and the second body **200.**

The substrate module **400** may include a first substrate **410,** a second substrate **420,** a connection substrate **430,** and a shield can **440.**

The first substrate **410** may be a printed circuit board (PCB). An image sensor may be disposed on the top surface of the first substrate **410.** The image sensor may be disposed on the first substrate **410** to face the lens module **300** in an optical axis direction. The top surface of the first substrate **410** is supported by the lower surface of the first guide **170** of the first body **100,** and the lower surface of the first substrate **410** may be supported by the top surface of the second guide **230** of the second body **200.** The cross-sectional area of the first substrate **410** may be larger than the cross-sectional area of the second substrate **420.**

The second substrate **420** may be a printed circuit board (PCB). The second substrate **420** may be disposed spaced apart from the first substrate **410** in an optical axis direction. The second substrate **420** may be disposed below the first substrate **410.** A connector **490** may be coupled to the lower surface of the second substrate **420.** The upper end of the connector **490** may be soldered to the lower surface of the second substrate **420.**

The second substrate **420** may be electrically connected to the first substrate **410.** The second substrate **420** and the first substrate **410** may be electrically connected via a connection substrate **430.** The connection substrate **430** may be a flexible printed circuit board (FPCB). The connection substrate **430** may be connected at the upper and lower ends to the first substrate **410** and the second substrate **420,** respectively, to electrically connect the first substrate **410** and the second substrate **420.**

The shield can **440** is disposed between the first substrate **410** and the second substrate **420,** and can space the first substrate **410** and the second substrate **420** apart in an optical axis direction. The shield can **440** may be called a spacer. The shield can **440** may include a fence portion (not shown) disposed between the first substrate **410** and the second substrate **420,** and a coupling portion (not shown) being extended from the fence portion and coupled to the second substrate **420.** The coupling portion may include a hole. A protrusion for coupling with the hole may be disposed on a side surface of the second substrate **420.**

Hereinafter, the coupling structure of the first body **100** and the lens module **300** will be described.

The first body **100** and the lens module **300** can be coupled together by welding. The first body **100** and the lens module **300** can be laser welded.

The camera module **10** may include a welded part **500** (see FIG. 5) for coupling the first body **100** and the lens module **300.** The welded part **500** may be disposed between the lower surface of the flange **320** and the top surface of the barrel part **130.** The lower surface of the flange **320** and the top surface of the barrel part **130** may be coupled to each other by the welded part **500.** The outer surface of the welded part **500** may be more protruded than the outer surface of the second region **132** of the barrel part **130.** The outer surface cross-sectional area of the welded part **500** may be larger than the outer surface cross-sectional area of the second region **132.** The outer surface of the first region **136** of the barrel part **130** may be protruded more outward than the outer surface of the welded part **500.** The outer surface cross-sectional area of the first region **136** may be larger than the outer surface cross-sectional area of the welded part **500.**

Meanwhile, as described above, the outer surface of the second region **132** of the barrel part **130** is a region that has not been surface-treated through anodizing, so there is an advantage in that the welding process with the flange **320** can be performed more easily.

Likewise, the outer surface of the barrel **310** of the lens module **300** may also be surface-treated through anodizing, but the outer surface of the flange **320** welded to the barrel part **130** may not be surface-treated.

A separated portion **510** may be formed between the lower surface of the flange **320** and the top surface of the barrel part **130.** The separated portion **510** may be a region that separates the lower surface of the flange **320** and the top surface of the barrel part **130** in an optical axis direction. The separated portion **510** may be referred to as an air gap. The separated portion **510** may be disposed inside the welded part **500.** The length of the separated portion **510** may be greater than the length of the welded part **500** in a direction perpendicular to the optical axis direction. The heat generated during the formation of the welded part **500** through the separated portion **510** may be minimized from being transferred to the lens **350** inside the lens module **300.**

In order to ensure watertightness in the region between the first body **100** and the lens module **300** through the welded part **500,** the length of the separated portion **510** with respect to the optical axis direction may be 15% or less of the thickness of the barrel part **130.**

According to the structure described above, since coupling means such as an adhesive or a sealing member are omitted through the welding-based coupling method between the first body and the lens module, there are advantages in that the manufacturing cost can be reduced due to a decrease in the number of parts, and the assembly process can be further simplified.

Furthermore, since the distance in the optical axis direction between the lens module and the substrate module can be precisely adjusted prior to the welding process between the first body and the lens module, there is an advantage in that an optimal resolution value inside the camera module can be secured.

In the above description, it is described that all the components constituting the embodiments of the present invention are combined or operated in one, but the present invention is not necessarily limited to these embodiments. In other words, inside the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas inside the equivalent scope should be interpreted as being included in the scope of the present invention.

## Claims

1. A camera module comprising:
a first body which includes a body part and a barrel part protruding upward from a top surface of the body part and having a hole formed on a top surface thereof ;
a lens module at least partially coupled to the hole and including a barrel and a lens disposed inside the barrel; and
a welded part coupling the first body and the lens module,
wherein the lens module includes a flange protruding outward from a side surface of the barrel relative to other regions thereof and disposed on the barrel part,
wherein the welded part is disposed between the flange and the barrel part,
wherein the barrel part includes a first region having a surface-treated outer surface, and a second region disposed above the first region and having a non-surface-treated outer surface, and
wherein an outer surface of the welded part protrudes further outward than an outer surface of the second region.

2. The camera module according to claim 1,
wherein the first region is an anodized region.

3. The camera module according to claim 1,
wherein a separation region, having at least a portion spaced apart in an optical axis direction, is disposed between the flange and the barrel part.

4. The camera module according to claim 3,
wherein the separation region is disposed inside the welded part.

5. The camera module according to claim 3,
wherein a length of the separation region in an optical axis direction is 15% or less of the thickness of the barrel part.

6. The camera module according to claim 1,
wherein an outer surface of the first region is protruded further outward than an outer surface of the second region

7. The camera module according to claim 1,
wherein the cross-sectional shape of each of the flange and the barrel part is circular.

8. The camera module according to claim 1,
wherein a first chamfered surface is formed on an upper outer surface of the barrel part where the welded part is formed, and
and a second chamfered surface is formed on a lower outer surface of the flange where the welded part is formed.

9. The camera module according to claim 1,
wherein the material of the first body and the barrel of the lens module is metal.
